Europäisches Patentamt

European Patent Office

Office européen des brevets

(11) Veröffentlichungsnummer: **0 288 975**
**A2**

# (12) EUROPÄISCHE PATENTANMELDUNG

(21) Anmeldenummer: 88106672.4

(22) Anmeldetag: 26.04.88

(51) Int. Cl.⁴: **C08G 59/64 , C08G 59/68 , C08G 59/62**

(30) Priorität: 29.04.87 US 43893

(43) Veröffentlichungstag der Anmeldung:
02.11.88 Patentblatt 88/44

(84) Benannte Vertragsstaaten:
CH DE FR GB IT LI NL SE

(71) Anmelder: **CIBA-GEIGY AG**
**Klybeckstrasse 141**
**CH-4002 Basel(CH)**

(72) Erfinder: **Brytus, Vincent**
**RFD 3-Box 437 Hamlin Road**
**Mahopac New York 10541(US)**

(74) Vertreter: **Zumstein, Fritz, Dr. et al**
**Bräuhausstrasse 4**
**D-8000 München 2(DE)**

(54) **Addukte aus Monoepoxiden und bestimmten Diaminen.**

(57) Addukte aus Monoepoxidverbindungen und bestimmten Diaminen, wie m-Xylylendiamin, 1,2-Diaminocyclohexan, Isophorondiamin, 1,3-Bis-(aminomethyl)-cyclohexan, 4,4′-Diaminodiphenylmethan und 4,4′-Diaminodicyclohexylmethan, stellen wertvolle Härtungsmittel für Epoxidharze dar und können bei sehr teifen Härtungstemperaturen, wie -4° bis 10°C, angewendet werden.

## Addukte aus Monoepoxiden und bestimmten Diaminen

Die vorliegende Erfindung betrifft neue Addukte aus Monoepoxidverbindungen und bestimmtenn Diaminen, welche als Härtungsmittel für Epoxidharze eingesetzt werden können, wobei sehr tiefe Härtungstemperaturen angewendet werden.

Es besteht ein Bedarf an einem Epoxidharzhärtersystem, welches Epoxidharze bei tiefen Temperaturen, beispielsweise im Temperaturbereich von -4° bis 10°C, zufriedenstellend aushärtet.

Ein härtbares Epoxidharzgemisch, welches ein solches Härtersystem enthält, muss eine vernünftige Verarbeitungszeit von 6 bis 8 Stunden aufweisen, und die Eigenschaften der gehärteten Harze sollen gut sein, insbesondere bezüglich der Korrosions-und Chemikalienbeständigkeit. Glanz-und Farbretention von gehärteten Beschichtungen sollen ferner denen entsprechen, die aus bekannten Epoxidharz-Aminhärter-Gemischen hergestellt werden.

Die üblichen Epoxidharzsysteme lassen sich bei tiefen Temperaturen, wie etwa 4°C, nicht befriedigend aushärten, so dass sie für solche Anwendungen ungeeignet sind. In Publikationen über das Härten von Epoxidharzen wird verhältnismässig wenig über das Härten bei tiefen Temperaturen berichtet.

In den US-Patenten 4,490,510 und 4,574,145 wird eine neue Klasse von Epoxidharzhärtungsmitteln beschrieben, welche Umsetzungsprodukte aus Harnstoff, Formaldehyd und einem Polyamin sind. Epoxidharzgemische, welche solche Härtungsmittel enthalten, können bei mässig tiefereren Temperaturen, das heisst, von 15°C an gehärtet werden.

Im US-Patent 2,864,775 werden Addukte aus aliphatischen Polyaminen und aliphatischen Monoepoxiden offenbart. Diese Addukte sind geeignete Härtungsmittel bei Temperaturen ab 20°C an. Doch ist die Härtungsgeschwindigkeit langsam bei tiefen Temperaturen, so dass für bessere Härtungsresultate Temperaturen von 40 bis 200°C empfohlen werden.

Das US-Patent 3,538,184 beschreibt Addukte aus Polyepoxiden und alkylsubstituiertem Hexamethylendiamin als Härtungsmittel für Epoxidharze. Solche Härtungsmittel enthaltende Epoxidharzgemische können bei tiefen Temperaturen bis zu 5°C ausgehärtet werden, doch benötigt man zur vollständigen Aushärtung dann 28 bis 32 Stunden.

In den US-Patenten 2,689,263 und 2,864,775 wird die Herstellung von Hydroxyalkylaminen durch Adduktbildung von Aminen mit Monoepoxiden beschrieben.

Gegenstand vorliegender Erfindung sind nun neue Härtungsmittel für Epoxidharze, welche Härtungstemperaturen von -4° bis 10°C ermöglichen, das Harzgemisch in einer vertretbaren Zeit von etwa 24 Stunden aushärten und den gehärteten Produkten akzeptierbare Eigenschaften verleihen.

Die erfindungsgemässen Härtungsmittel sind Addukte, erhältlich durch Umsetzung von einem Alkylglycidylether mit 3 bis 14 C-Atomen, vorzugsweise 3 bis 8 C-Atomen, in der Alkylgruppe, Allylglycidylether, Phenylglycidylether, Alkylphenylglycidylether mit 1 bis 18 C-Atomen, vorzugsweis 1 bis 4 C-Atomen, in der Alkylgruppe oder einem Glycidylester einer tertiären Monocarbonsäure mit 9 bis 11 C-Atomen im Molekül als Monoepoxidverbindung mit m-Xylylendiamin, 1,2-Diaminocyclohexan, Isophorondiamin (1,3,3-Trimethyl-1-aminomethyl-4-aminocyclohexan), 1,3-Bis-(aminomethyl)-cyclohexan, 4,4'-Diaminodiphenylmethan und 4,4'-Diaminodicyclohexylmethan, vorzugsweise m-Xylylendiamin, als Diamin, wobei zur Adduktbildung 0,5 bis 1,25 Mole, vorzugsweise 0,05 bis 1 Mol, Monoepoxidverbindung pro 1 Mol Diamin eingesetzt werden.

Insbesondere setzt man als Monoepoxidverbindung n-Butylglycidylether oder p-tert.-Butylphenylglycidylether zur Adduktbildung ein.

Die Glycidylether der zuvor genannten Monoepoxidverbindungen sind bekannt und im Handel erhältlich. Die Glycidylester der tertiären Monocarbonsäuren, d.h. eine tertiäre COOH-Gruppe enthaltende Monocarbonsäuren, sind ebenfalls bekannt und im Handel beispielsweise unter der Bezeichnung Cardura® E 10 von der Fa. Shell erhältlich.

Die erfindungsgemässen Addukte werden nach bekannten Verfahren hergestellt, beispielsweise nach den in den US-Patenten 2,689,263 und 2,864,775 offenbarten Verfahren, indem die Monoepoxidverbindungen mit den Diaminen zusammen auf mässig erhöhter Temperatur von 60 bis 80°C für eine Zeit von 2 bis 4 Stunden erhitzt werden bis die Adduktbildung vollständig ist.

Die für das Verfahren eingesetzten Diamine sind bekannt und zum Teil im Handel erhältlich.

Das zur Adduktbildung verwendete Molverhältnis von Monoepoxidverbindung zu Diamin stellt sicher, dass ein Addukt mit ausreichenden Aminogruppen entsteht. Die bei der Adduktbildung entstehenden Hydroxyalkylaminoeinheiten wirken katalysierend bei der Härtung von Epoxidharzen mit solchen Addukten.

Die vorliegende Erfindung betrifft auch Epoxidharzgemische, die im Temperaturbereich von -4°C bis 10°C härtbar sind, enthaltend

(a) ein Epoxidharz,

(b) ein erfindungsgemässes Addukt in für die Härtung des Epoxidharzes ausreichender Menge,

(c) einen Härtungsbeschleuniger und

(d) ein Verträglichkeitsmittel in ausreichender Menge.

Als Epoxidharze, die bei tiefen Temperaturen gehärtet werden können, kommen Epoxidverbindungen mit 2 oder mehr als 2 Epoxidgruppen im Molekül in Frage.

Die Forderung, dass das erfindungsgemässe härtbare Epoxidharzgemisch bei tiefer Temperatur härtbar ist, verlangt eine hohe Verträglichkeit aller Komponenten im härtbaren Epoxidharzgemisch. Folglich verwendet man dafür vorzugsweise flüssige Harze, wie Bisphenol A-diglycidylether oder Bisphenol F-diglycidylether. Die halbfesten oder niedermolekularen festen Epoxidharze, die durch Vorverlängerung der genannten Diglycidylether mit Bisphenol A erhalten werden, sind ebenfalls für die erfindungsgemässen Gemische geeignet.

Obwohl die erfindungsgemässen Addukte eine Anzahl von Hydroxylgruppen im Molekül aufweisen, ist es erforderlich als Komponente (c) einen weiteren Katalysator dem erfindungsgemässen Gemisch zuzusetzen, damit die Härtungsreaktion, die Umsetzung des Amins mit der Epozidgruppem beschleunigt wird. Als solche Beschleuniger eignen sich für erfindungsgemässen Gemische vorzugsweise Salizylsäure, Phenol, alkylsubstituiertes Phenol mit 1 bis 12 C-Atomen, insbesondere 4 bis 9 C-Atome, in der Alkylgruppe, oder Mannichbasen, die durch Umsetzung von Phenol, Formaldehyd und Dialkylamine erhalten werden.

Die ausreichende Menge der Komponente (c) beträgt normalerweise 0,5 bis 5 Gew.-teile, vorzugsweise 1 bis 3 Gew.-teile, pro 100 gew.-teile Epoxidharz.

Um die Verträglichkeit im erfindungsgemässen Gemisch zu erhöhen und die Härtung des Gemisches bei tiefer Temperatur zu fördern, ist es wichtig, dem erfindungsgemässen Gemisch ein Verträglichkeitsmittel als Komponente (d) zuzusetzen.

Geeignete Verträglichkeitsmittel für die erfindungsgemässen Gemische sind beispielsweise und vorzugsweise Benzylalkohol, Diethylenglykol, Dipropylenglykol, die niederen Monoalkylether des Ethylen-oder Propylenglykols mit 1 bis 6 C-Atomen in der Alkylgruppe, vorzugsweise der Monobutylether des Ethylenglykols oder der Monomethyl-oder Monoethylether des Propylenglykols. Das besonders bevorzugte Verträglichkeitsmittel ist Benzylalkohol.

Die ausreichende Menge der Komponente (d) beträgt normalerweise 5 bis 20 Gew.-teile, vorzugsweise 7 bis 15 Gew.-teile, auf 100 Gew.-teile des härtbaren Epoxidharzgemisches.

Die erfindungsgemässen Addukte weisen ferner den Vorteil auf, dass sie weniger zur Carbamatbildung neigen, die bei der Reaktion von Diaminen mit dem Kohlendioxid der Luft auftreten kann. Die aus den erfindungsgemässen Epoxidharzgemischen hergestellten Filme zeichnen sich durch ein gutes Aussehen und grosse Klarheit aus.

Die erfindungsgemässen Addukte müssen nicht als einzelne Verbindungen isoliert werden. Das Reaktionsgemisch aus Diamin und Monoepoxidverbindung enthält immer einen Ueberschuss an Aminogruppen, sogar beim grössten Molverhältnis von 1,25 Mol Epoxidverbindung zu 1 Mol Diamin, sodass genügend reaktive Aminogruppen im Reaktionsgemisch vorliegen. Obwohl die einzelnen Addukte aus dem Reaktionsgemisch isoliert werden können, ist dies nicht erforderlich, sondern sie werden vorteilhaft als Reaktionsgemisch eingesetzt.

Dem erfindungsgemässen härtbaren Epoxidharzgemisch können ferner die gebräuchlichsten Zusätze zugegeben werden, wie beispielsweise Füllstoffe, Pigmente, Farbstoffe, Verlaufmittel oder Plastifizierungsmittel.

## Beispiel 1: Addukt aus m-Xylylendiamin und n-Butylglycidylether

In einen 4-Halsrundkolben, ausgerüstet mit mechanischem Rührer, Stickstoffeinlassrohr, Tropftrichter und Thermometer/Thermoregulator werden 42,2 Gew.-teile m-Xylylendiamin unter Stickstoffatmosphäre zugegeben. Unter Rühren wird das Diamin auf 60°C erhitzt, worauf tropfenweise 50,0 Gew.-teile n-Butylglycidylether innerhalb einer Stunde zum Reaktionsgefäss zugegeben werden. Zur Vervollständigung der Additionsreaktion wird das Reaktionsgemisch noch 1 Stunde bei 60° gehalten.

Vorteilhafterweise und um ein formuliertes Härtungsmittel herzustellen wird das oben erhaltene Addukt in 13,0 Gew.-teilen Benzylalkohol und 3,5 Gew.-teilen Salizylsäure gelöst.

Das oben hergestellte Addukt ist ein aus 1,15 Molen n-Butylglycidylether und 1 Mol m-Xylylendiamin erhaltenes Addukt.

Beispiel 2: Addukt aus m-Xylylendiamin und p-tert.-Butylphenylglycidylether

Entsprechend der im Beispiel 1 angegebenen Arbeitsweise wird ein Addukt aus 22,7 Gew.-teilen m-Xylylendiamin und 32,2 Gew.-teilen p-tert.-Butylphenylglycidylether hergestellt.

Aus dem oben erhaltenen Addukt wird durch Zusatz von 10 Gew.-teilen Benzylalkohol und 1 Gew.-teil Salizylsäure ein formuliertes Härtungsmittel hergestellt.

Beispiel 3:

Ein härtbares Epoxidharzgemisch wird hergestellt, indem 100 Gew.-teile eines Bisphenol A-diglycidylethers mit einem Epoxidgehalt von 5,3 Aequivalenten/kg und 65 Gew.-teile der Härterformulierung gemäss Beispiel 1 gemischt werden. Das härtbare Gemisch enthält somit 100 Gew.-teile der Komponente (a), 55 Gew.-teile des Adduktes gemäss Beispiel 1 als Komponente (b), 2,1 Gew.-teile Salizylsäure als Komponente (c) und 7,7 Gew.-teile Benzylalkohol als Komponente (d).

Ein grundiertes Stahlblech wird mit dem härtbaren Epoxidharzgemisch unter Verwendung eines Rakelmessers so beschichtet, dass ein Film erhalten wird. Die Dicke des trockenen Filmes beträgt 0,1524 mm. Das mit dem Film beschichtete Stahlblech wird bei 4,4°C während 7 Tagen ausgehärtet.

Die Eigenschaften des gehärteten Filmes werden nach 4 und nach 7 Tagen bestimmt.

Durch Messung mit dem Differentialabtastkalorimeter (Differential scanning calorimeter DSC) wird der Grad der Aushärtung bestimmt. Dieser beträgt nach 4 Tagen/4,4°C 98 % und nach 7 Tagen/4,4°C ebenfalls 98 %.

| Eigenschaften des gehärteten Filmes | nach 4 Tagen | nach 7 Tagen |
|---|---|---|
| Schlagfestigkeit, frontal (cm·kg)* | 28 < 30 | 24 < 26 |
| Schlagfestigkeit, rückwertig (cm·kg)** | 10 < 12 | 4 < 6 |
| Bleistifthärte*** | B | F |
| Härte nach Persoz (sek.)**** | 41 | 88 |
| Haftung (%)***** | 100 | 85 |

| * gemäss ASTM G 14 | *** gemäss ASTM D 3363 |
|---|---|
| ** gemäss ASTM G 14 | **** gemäss ASTM D 4366 |
| | ***** gemäss ASTM D 3359 |

Beispiel 4:

Ein anderes härtbares Epoxidharzgemisch wird hergestellt durch Mischen von 100 Gew.-teilen des in Beispiel 3 verwendeten Epoxidharzes und 66 Gew.-teilen der Härterformulierung gemäss Beispiel 2. Das härtbare Gemisch enthält somit 100 Gew.-teile der Komponente (a), 55 Gew.-teile des Adduktes gemäss Beispiel 2 als Komponente (b), 1 Gew.-teil Salizylsäure als Komponente (c) und 10 Gew.-teile Benzylalkohol als Komponente (d).

Es wird wie in Beispiel 3 beschrieben ein gehärteter Film hergestellt und dessen Eigenschaften nach Härtung während 7 Tagen bei 4,4°C bestimmt.

| Eigenschaften | nach 7 Tagen |
|---|---|
| Bleistifthärte | HB |
| Härte nach Persoz (sek.) | 255 |
| Reibungen mit MEK *) | 100 (Doppelreibungen) |

Nach 7 Tagen weist der Film gemäss DSC-Messung einen Aushärtungsgrad von 80 bis 85 % auf.

*) MEK = Methylethylketon

Beispiel 5: Härtung eines Epoxidharzgemisches bei -4°C

Je 100 Gew.-teile des in Beispiel 3 verwendeten flüssigen Epoxidharzes werden mit 33,2 Gew.-teilen eines formulierten Addukthärters, hergestellt gemäss Beispiel 1 aus 0,85 Mol n-Butylglycidylether und 1 Mol m-Xylylendiamin und enthaltend 0,8 Gew.-teile Salizylsäure und 8 Gew.-teile Benzylalkohol, gemischt. Die Härtung wird jeweils während 7 Tagen sowohl bei -4°C als auch bei 4,4°C vorgenommen. Gemäss DSC-Messung beträgt der Aushärtungsgrad bei -4°C 85 % und bei 4,4°C 98 %.

## Ansprüche

1. Ein Addukt, erhältlich durch Umsetzung von einem Alkylglycidylether mit 3 bis 14 C-Atomen in der Alkylgruppe, Allylglycidylether, Phenylglycidylether, einem Alkylphenylglycidylether mit 1 bis 18 C-Atomen in der Alkylgruppe oder einem Glycidylester einer tertiären Monocarbonsäure mit 9 bis 11 C-Atomen im Molekül als Monoepoxidverbindung mit m-Xylylendiamin, 1,2-Diaminocyclohexan, Isophorondiamin, 1,3-Bis-(aminoethyl)-cyclohexan, 4,4'-Diaminodiphenylmethan und 4,4'-Diaminodicyclohexylmethan als Diamin, wobei zur Adduktbildung 0,5 bis 1,25 Mole Monoepoxidverbindung pro 1 Mol Diamin eingesetzt werden.

2. Ein Addukt gemäss Anspruch 1, worin als Monoepoxidverbindung ein Alkylglycidylether mit 3 bis 8 C-Atomen in der Alkylgruppe oder ein Alkylphenylglycidylether mit 1 bis 4 C-Atomen in der Alkylgruppe eingesetzt werden.

3. Ein Addukt gemäss Anspruch 2, worin als Monoepoxidverbindung n-Butylglycidylether oder p-tert.-Butylphenylglycidylether eingesetzt werden.

4. Ein Addukt gemäss Anspruch 1, worin als Diamin m-Xylylendiamin eingesetzt wird.

5. Ein Addukt gemäss Anspruch 1, worin die Menge der Monoepoxidverbindung 0,85 bis 1 Mol pro 1 Mol Diamin beträgt.

6. Ein im Temperaturbereich von -4° bis 10°C härtbares Eoxidharzgemisch enthaltend
    (a) ein Epoxidharz,
    (b) ein Addukt gemäss Anspruch 1 in für die Härtung des Epoxidharzes ausreichender Menge,
    (c) einen Härtungsbeschleuniger und
    (d) ein Verträglichkeitsmittel in ausreichender Menge.

7. Ein Gemisch gemäss Anspruch 6, worin das Addukt (b) aus 0,85 bis 1 Mol einer Monoepoxidverbindung pro 1 Mol eines Diamins hergestellt wurde.

8. Ein Gemisch gemäss Anspruch 6, worin der Härtungsbeschleuniger (c) aus Salizylsäure, Phenol, Alkylphenol mit 1 bis 12 C-Atomen in der Alkylgruppe oder einer Mannichbase, hergestellt durch Reaktion von Phenol, Formaldehyd und eines Dialkylamins, besteht.

9. Ein Gemisch gemäss Anspruch 8, worin der Beschleuniger (c) Salizylsäure ist.

10. Ein Gemisch gemäss Anspruch 6, worin das Verträglichkeitsmittel (d) Benzylalkohol, Diethylenglykol, Dipropylenglykol, oder ein niederer Monoalkylether des Ethylenglykols oder des Propylenglykols ist.

11. Ein Gemisch gemäss Anspruch 10, worin das Verträglichkeitsmittel Benzylalkohol ist.